# EUROPEAN PATENT APPLICATION

(11) **EP 4 432 117 A1**
(43) Date of publication of application: **18.09.2024**
(21) Application number: 21965958.8
(22) Date of filing: 30.11.2021
(51) Int. Cl.: G06F 16/22

(54) **DATA MODEL GENERATION METHOD AND APPARATUS**

(71) Applicant: Siemens Aktiengesellschaft, 80333 München (DE)
(72) Inventor: YE, Xianyi, Beijing 100084 (CN)
(74) Representative: Isarpatent
(86) International application number: PCT/CN2021/134650
(87) International publication number: WO 2023/097521

(57) **Abstract**

Provided in the embodiments of the present application are a data model generation method and apparatus, by means of which a data model closely related to a target service can be generated with relatively high accuracy and efficiency, such that an enterprise can perform independent research and development on the basis of the generated data model. The data model generation method comprises: acquiring a data access statement sent by a user end to a database, wherein the data access statement is used for accessing data of a target service in the database; according to the data access statement, acquiring an identifier of each of at least one target table in the database which is called by the target service, and an identifier of a target column in the target table; determining a data type of the target column according to the identifier of the target table and the organization and structure of a table in the database; and determining a data model of the database according to the identifier of the target table, the identifier of the target column and the data type.

## Description

### Technical field

The present application relates to the technical field of databases, in particular to a data model generation method and apparatus.

### Background art

At present, large and medium-sized enterprises may have large numbers of application systems, with relatively complex distribution and structure of tables of databases in the application systems. Since these application systems are generally implemented or developed by third-party companies, enterprises do not know which tables and which columns in base-layer databases are used by service modules on these application systems, and this makes future autonomous research and development by enterprises very difficult.

### Summary of the invention

The present application provides a data model generation method and apparatus, capable of generating a data model closely related to a target service with high accuracy and efficiency, enabling an enterprise to perform autonomous research and development on the basis of the data model generated.

In a first aspect, a data model generation method is provided, comprising: acquiring a data access statement sent by a user end to a database, the data access statement being used to access data of a target service in the database; acquiring an identifier of each of at least one target table in the database which is called by the target service, and an identifier of a target column in the target table, according to the data access statement; determining a data type of the target column, according to the identifier of the target table and a schema of the database; determining a data model of the database, according to the identifier of the target table, the identifier of the target column and the data type.

When a user operates an application system (e.g. accesses data of a target service), a data access statement related to the user's operation will be sent to a database from the user end. Thus, the data access statement acquired in the technical solution described above is closely related to the target service accessed by the user, and the data model generated on the basis of the data access statement is likewise closely related to the target service accessed by the user, so the problem of generating a large number of invalid data models can be effectively avoided. Furthermore, the above technical solution does not rely on manual experience, so the efficiency and accuracy with which the data model is generated are effectively improved.

In some possible implementations, the step of acquiring a data access statement sent by a user end to a database comprises: filtering multiple items of information generated on the basis of the target service, to obtain the data access statement, wherein the multiple items of information comprise the data access statement.

Multiple items of information can be generated on the basis of the target service, the multiple items of information comprising information other than the data access statement. The technical solution described above filters the multiple items of information, to filter out information other than the data access statement in the multiple items of information, such that all of the remaining information is the data access statement closely related to the target service, so the problem of generating a large number of invalid data models can be further avoided.

In some possible implementations, the step of acquiring an identifier of each of at least one target table in the database which is called by the target service, and an identifier of a target column in the target table, according to the data access statement, comprises: when the data access statement is a select statement, extracting a first string between a "from" keyword and a conditional keyword in the select statement, the first string being the identifier of the target table; and extracting a second string between a "select" keyword and the "from" keyword in the select statement, the second string being the identifier of the target column.

In some possible implementations, when the select statement is a join select statement and the at least one target table comprises multiple target tables, the method further comprises: acquiring a relationship of the multiple target tables on the target service, according to the join select statement; and the step of determining a data model of the database, according to the identifier of the target table, the identifier of the target column and the data type, comprises: determining the data model according to the identifier of the target table, the identifier of the target column, the relationship of the multiple target tables on the target service, and the data type.

The technical solution described above utilizes structural information in the data access statement to determine a potential relationship between tables by analysis, and generates a data model according to this relationship. The fact that the technical solution above does not rely on a reference foreign key in a schema of the database, avoids the disadvantage of inaccuracy of the generated data model or even inability to generate a data model relationship due to the lack of a reference foreign key in the schema of the database, such that the accuracy of the generated data model is further improved.

In some possible implementations, the step of acquiring a relationship of the multiple target tables on the target service, according to the join select statement, comprises: acquiring a relationship of the multiple target tables on the target service, from a third string following the conditional keyword in the join select statement.

In some possible implementations, the step of acquiring an identifier of each of at least one target table in the database which is called by the target service, and an identifier of a target column in the target table, according to the data access statement, comprises: when the data access statement is an insert statement, extracting a fourth string between an "insert" keyword and a "value" keyword in the insert statement, the fourth string being the identifier of the target table; and extracting a fifth string in brackets following the "value" keyword in the insert statement, the fifth string being the identifier of the target column.

In some possible implementations, the method further comprises: subjecting the identifier of the target table and the identifier of the target column to aggregation; and the step of determining a data model of the database, according to the identifier of the target table, the identifier of the target column and the data type, comprises: determining the data model on the basis of the identifier of the target table and the identifier of the target column after aggregation thereof.

In the technical solution described above, before generating the data model, the identifier of the target table and the identifier of the target column are aggregated; compared with the identifier of the target table and the identifier of the target column being in a discrete state, this facilitates subsequent operations, helping to improve the efficiency of data model generation.

In a second aspect, a data model generation apparatus is provided, comprising: a memory for storing a program; a processor for executing the program stored in the memory, wherein, when the program stored in the memory is executed, the processor is used to perform the method in the first aspect above or the implementations thereof.

In a third aspect, a computer readable storage medium is provided, storing program code for execution by a device, the program code comprising instructions for performing steps in the method in the first aspect above or the implementations thereof.

In a fourth aspect, a data model generation apparatus is provided, comprising: a preprocessor, for acquiring a data access statement sent by a user end to a database, the data access statement being used to access data of a target service in the database; an analyser, for acquiring an identifier of each of at least one target table in the database which is called by the target service, and an identifier of a target column in the target table, according to the data access statement; a model generator, for determining a data type of the target column, according to the identifier of the target table and a schema of the database; the model generator being further used for determining a data model of the database, according to the identifier of the target table, the identifier of the target column and the data type.

In a fifth aspect, a data model generation apparatus is provided, comprising units for performing the method in the first aspect above or the implementations thereof.

### Brief description of the drawings

Fig. 1 is a schematic drawing of a system architecture in an embodiment of the present application.
Fig. 2 is a schematic diagram of a data model generation method in an embodiment of the present application.
Fig. 3 is a flow chart of a data model generation method in an embodiment of the present application.
Fig. 4 is a flow chart of another data model generation method in an embodiment of the present application.
Fig. 5 is a schematic block diagram of a data model generation apparatus in an embodiment of the present application.
Fig. 6 is a schematic block diagram of another data model generation apparatus in an embodiment of the present application.
Fig. 7 is a schematic block diagram of another data model generation apparatus in an embodiment of the present application.

### Key to the drawings:

110 - user end;
120 - database;
130 - third-party device;
200 - data model generation method in embodiments of the present application;
210 - acquiring a data access statement sent by a user end to a database;
220 - acquiring an identifier of each of at least one target table in the database which is called by the target service, and an identifier of a target column in each target table, according to the data access statement;
230 - determining a data type of the target column, according to the identifier of the target table and a schema of the database;
240 - determining a data model, according to the identifier of the target table, the identifier of the target column and the data type;
Pr - preprocessor;
An - analyser;
Bu - model generator;
Re - analysing multiple rows of information row-by-row;
Fi - filtering;
Di - sending SQL statement to corresponding analyser;
Tn - acquiring table name of target table;
Cn - acquiring column name of target column;
Dt - acquiring data type of target column;
Ge - generating data model;
Er - acquiring relationship;
As - aggregation;
500 - data model generation apparatus;
510 - preprocessor;
520 - analyser;
530 - model generator;
600 - data model generation apparatus;
610 - acquisition unit;
620 - determining unit;
700 - data model generation apparatus;
701 - memory;
702 - processor;
703 - communication interface;
704 - bus.

### Detailed description of the invention

Technical solutions in embodiments of the present application are described below with reference to the drawings. It should be understood that the specific examples herein are merely intended to help those skilled in the art to better understand embodiments of the present application, without limiting the scope of embodiments of the present application.

It should be understood that in various embodiments of the present application, the sizes of sequence numbers of each process do not signify the order of execution, and the order of execution of each process should be determined by the function and internal logic thereof, and should not constitute any limitation of the process of implementing embodiments of the present application.

It should also be understood that various embodiments described herein may be implemented alone or in combination, and embodiments of the present application impose no limitations in this regard.

Unless otherwise stated, all technical and scientific terms used in embodiments of the present application have the same meanings as those commonly understood by those skilled in the technical field of the present application. Terms used in the present application are merely intended to describe specific embodiments, not to limit the scope of the present application.

Generally, large and medium-sized enterprises may have large numbers of application systems, with relatively complex distribution and structure of tables of databases in the application systems. Since these application systems are generally implemented or developed by third-party companies, even though the third-party companies will provide the enterprises with design files relating to the application systems, the problem will sometimes arise that the content of the design files is not comprehensive or that the instructions in the design files do not correspond exactly to the actual application systems. Thus, enterprises do not know which tables and which columns in base-layer databases are used by service modules on these application systems, and this makes future autonomous research and development by enterprises very difficult. For example, based on data of an existing application system, enterprises must subject the application system to information upgrade/modification or service expansion.

At present, two methods are widely used in the industry to solve the abovementioned problems, the first being a method based on manual analysis. Specifically, the method mainly relies on manual work to sort through data and columns (also called fields) on interactive table forms of various application systems when processing various services, and find data and columns of tables in a database that match said data and columns. This information is then gathered together and tidied up, to finally perform analysis to determine tables of databases that application systems might call, and corresponding columns. For example, the application system is a financial system, and a user needs to query the sales volume of each quarter in one year; after the user's query, data outputted by the financial system is "A", "B", "C" and "D", and the user can then reverse-search for "A", "B", "C" and "D" in a database, or determine a few items of data having features amongst the four items of data "A", "B", "C" and "D", such as "C" and "D", then search for "C" and "D" in the database, and finally perform analysis to determine a database table that the financial system might call, and a corresponding column.

This method primarily relies on manual experience, so its efficiency and accuracy are relatively low, especially in cases where a database comprises a large number of tables. In addition, since the computation logic after submission of the application system table form might involve processing and aggregation querying of the structure of intermediate tables or a large number of tables, this querying and processing cannot be visually seen directly on a user interface, so the method of manual analysis might overlook many potential data models, with the result that the data model obtained is not very accurate.

The second method is an analysis method based on the organization and structure of tables in a database (schema). Specifically, by calling associated interfaces of databases corresponding to application systems, the method acquires the relationships and structures of tables of all databases in the application systems at present, and finally reverse-generates a data model.

Since this method is unable to dynamically perceive which tables in a database have been accessed for a particular service, it is unable to help the user to effectively determine a data model currently used by an application system by performing sorting. For example, a database contains 1000 tables, and when a user accesses data of a particular service, an application system might only use 100 of these tables, but because the method is unable to learn which 100 of the 1000 tables are used, it has to subject all 1000 tables to reverse data model generation, which takes a long time and has low efficiency. In addition, since a database might contain data not generated by human-machine interaction or data unrelated to the service currently accessed by the user, the problem may arise that the data model generated deviates from the service and is unrelated to the service currently accessed by the user.

Further, relationships in data models generated by the method are highly reliant on reference foreign keys of tables of databases. If a table does not contain information of this type, a relationship of a data model cannot be generated. It has been proven through a large number of actual production environments that the larger the enterprise system, the less it contains strong reference foreign key relationships of this type. Therefore, the method is not very feasible in actual production environments.

In view of this, embodiments of the present application propose a data model generation method, which is capable of generating a data model closely related to a target service with high accuracy and efficiency, enabling an enterprise to perform autonomous research and development on the basis of the data model generated.

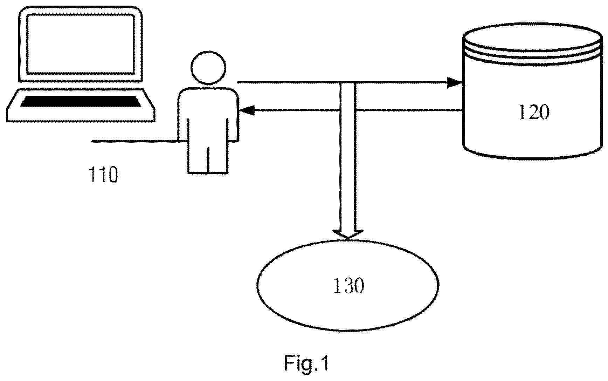

Fig. 1 is a schematic diagram of a system architecture in an embodiment of the present application.

The system architecture shown in Fig. 1 comprises a user end 110, a database 120 and a third-party device 130. The user end 110 may be an interface used to provide data query service management. The user end 110 may also be called a client end or another name.

The database 120 may for example be mysql, oracle, sqlserver, sqlite, etc. Information may be transmitted between the user end 110 and the database 120, for example, when the user needs to query data, e.g. query sales volume of each quarter in one year, query information may be inputted at the user end 110, and after receiving the query information, the user end 110 converts the query information to database language, such as structured query language (SQL), and sends the database language to the database 120. The database 120 then determines, by querying, the sales volume of each quarter in one year on the basis of the received database language, and sends the query result to the user end 110. The user end 110 can then output the query result to the user, and the user can thus obtain the sales volume of each quarter in one year.

The third-party device 130 may be in communicative connection with the user end 110 and the database 120, so as to acquire information transmitted between the user end 110 and the database 120, and perform some operations on the basis of the information, such as generating a data model of the database 120. Specifically, the third party 130 may comprise a communication interface, to realize a communicative connection with another device (e.g. the user end 110). The communicative connection may be wired or wireless. The third-party device 130 may acquire the information during information transmission; or, if the user end 110 sends information to the database 120, the third-party device 130 may acquire the information from the database 120 after the information has been sent to the database 120.

Demonstratively, the third-party device 130 may be a server. The server is a device providing a computing service, and the composition of the server comprises a processor, a hard disk, an internal memory, a system bus, etc.; the server has a similar architecture to a general-purpose computer, but due to the need to provide a highly reliable service, it is subject to higher requirements in terms of processing ability, stability, reliability, security, expandability, manageability, etc.

It should be understood that Fig. 1 is merely a schematic drawing of one system architecture provided in embodiments of the present application, and the positional relationships among equipment, devices and modules, etc. shown in the figure do not constitute any limitation.

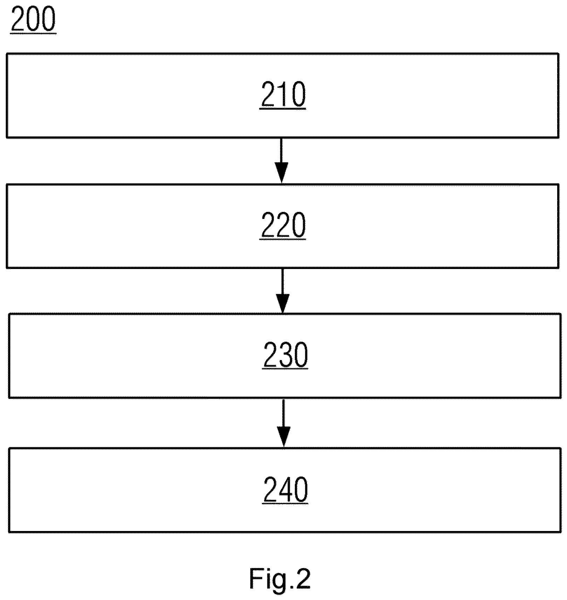

The main process of the data model generation method in embodiments of the present application is presented below with reference to Fig. 2.

Fig. 2 shows a schematic flow chart of a data model generation method 200 in an embodiment of the present application. The method 200 may be performed by a third-party device other than a user end and a database, such as the third-party device 130 shown in Fig. 1. As shown in Fig. 2, the method 200 may comprise at some of the following content.

Step 210: acquiring a data access statement sent by a user end to a database, the data access statement being used to access data of a target service in the database.

Step 220: acquiring an identifier of each of at least one target table in the database which is called by the target service, and an identifier of a target column in each target table, according to the data access statement.

Step 230: determining a data type of the target column, according to the identifier of the target table and a schema of the database.

Step 240: determining a data model of the database, according to the identifier of the target table, the identifier of the target column and the data type.

When a user operates an application system (e.g. accesses data of a target service), a data access statement related to the user's operation will be sent to the database from the user end. Thus, the data access statement acquired in embodiments of the present application is closely related to the target service accessed by the user, and the data model generated on the basis of the data access statement is likewise closely related to the target service accessed by the user, so the problem of generating a large number of invalid data models can be effectively avoided. Furthermore, the above technical solution does not rely on manual experience, so the efficiency and accuracy with which the data model is generated are effectively improved.

In embodiments of the present application, the third-party device may comprise a preprocessor, an analyser and a model generator. Demonstratively, step 210 may be performed by the preprocessor, step 220 may be performed by the analyser, and steps 230 and 240 may be performed by the model generator. Of course, the third-party device may also comprise other devices, such as a data type processor. In this case, step 210 may be performed by the preprocessor, step 220 may be performed by the analyser, step 230 may be performed by the data type processor, and step 240 may be performed by the model generator. To facilitate description, the case where step 210 is performed by the preprocessor, step 220 is performed by the analyser, and steps 230 and 240 are performed by the model generator will be taken as an example below to describe the method in embodiments of the present application.

As an example, the preprocessor may acquire the data access statement by means of a plug-in provided by the database, such as a command line tool.

As another example, the preprocessor may activate an option, and may then obtain, by listening, the data access statement sent to the database by the user end, and is thereby able to acquire the data access statement.

Optionally, the preprocessor may acquire the data access statement from the database, or may acquire the data access statement during transmission of the data access statement from the user end to the database.

Optionally, the data access statement may include but is not limited to an SQL statement. Embodiments of the present application are explained taking an SQL statement as an example. SQL statements may comprise data definition language (DDL) and data manipulation language (DML); the SQL statement in embodiments of the present application is a DML statement. The DML statement may comprise an insert statement, a delete statement, an update statement and a query (select) statement. We take into account the fact that the granularity of delete statements and update statements is too small; for example, they generally delete one column or update one column, and consequently, it might be impossible to determine a data model by analysis on the basis of a delete statement and an update statement. Therefore, the SQL statement in embodiments of the present application is a select statement or an insert statement.

If the SQL statement is acquired by the preprocessor from the database, we take into account the fact that, after the database has received the SQL statement sent by the user end, the database may generate context information based on the SQL statement, e.g. generate a time stamp, a session ID or a process ID, etc. That is to say, the database may generate multiple items of information based on the target service, the multiple items of information comprising information other than multiple SQL statements. Moreover, even if it is an SQL statement, it might comprise a delete statement and an update statement.

Alternatively, if the SQL statement is acquired during transmission from the user end to the database, then in addition to the SQL statement, the user end might also transmit other information to the database.

Thus, step 210 may specifically comprise: the preprocessor filtering multiple items of information generated on the basis of the target service, filtering out information other than SQL statements in the multiple items of information and filtering out delete statements and update statements among SQL statements, to obtain a select statement or an insert statement.

This technical solution filters the multiple items of information, to filter out information other than the data access statement in the multiple items of information, such that all of the remaining information is the data access statement closely related to the target service, so the problem of generating a large number of invalid data models can be further avoided.

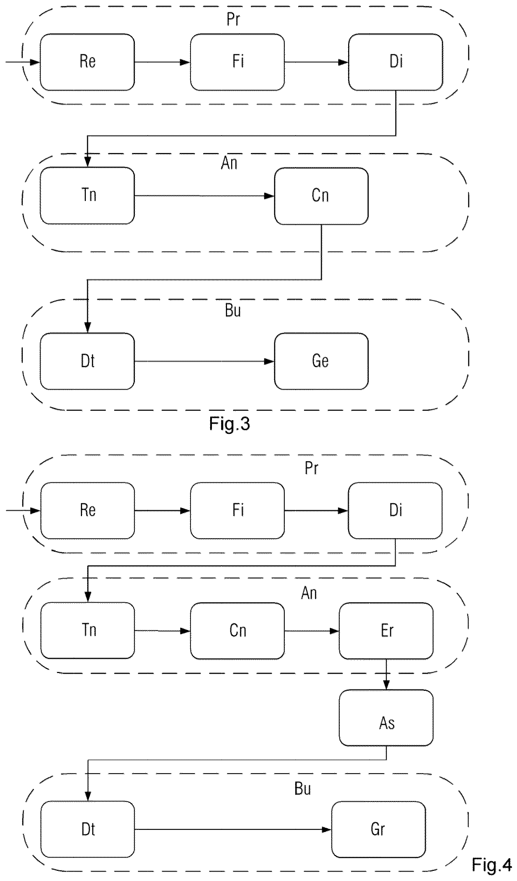

The preprocessor might simultaneously receive multiple rows of information; thus, optionally, as shown in Figs. 3 and 4, the preprocessor may also subject the multiple rows of information received to row-by-row analysis, and then filter each row of information, to obtain the SQL statement.

Optionally, in embodiments of the present application, the identifier of the target table may be a table name of the target table, or an ID of the target table, or a serial number of the target table among all tables in the database. Similar to the identifier of the target table, the identifier of the target column may be a column name of the target column, or an ID of the target column, or a serial number of the target column in the target table. In each case below, the identifier of the target table is the table name and the identifier of the target column is the column name, as an example, for the purpose of illustration.

The analyser acquires the table name of the target table and the column name of the target column in different ways for select statements and insert statements.

For a select statement, specifically, the analyser may extract a first string between the keyword "from" and a conditional keyword in the select statement, and the first string is the table name of the target table. For example, a select statement is "select coll, col2, col3 from table_1 where..."; the string between the keyword "from" and the conditional keyword in this select statement is table_1, so the table name extracted is table_1. As another example, the select statement is "select coll, col2, col3 from table_1 left join table_2 on..."; the string between the keyword "from" and the conditional keyword in this select statement is table_1 and table_2, so the table name extracted is table_1 and table_2.

If the analyser extracts multiple first strings, the multiple first strings may be separated by a comma, i.e. a set of table names may be obtained, e.g. [table_1, table_2] above.

Furthermore, the analyser may extract a second string between the keyword "select" and the keyword "from" in the select statement, and the second string is the column name of the target column. If there are multiple column names, the multiple column names may likewise be separated by a comma. For example, the select statement is "select coll, col2, col3 from table_1 where..."; the string between the keyword "select" and the keyword "from" in this select statement is "coll, col2, col3", so the column name of the target column is [coll, col2, col3].

In the case of an insert statement, the analyser may extract a fourth string between the keywords "insert into" and the keyword "values" in the insert statement, and the fourth string is the table name of the target table. Furthermore, the analyser may extract a fifth string in brackets following the keyword "values" in the insert statement, and the fifth string is the column name of the target column.

Furthermore, if the select statement is a join select statement, such as the statement "select coll, col2, col3 from table_1 left join table_2 on..." above, and the target table comprises multiple target tables, then as shown in Fig. 4, the method 200 may further comprise: the analyser acquiring a relationship of multiple target tables on the target service according to the join select statement. In other words, the analyser may acquire by which columns the multiple target tables are associated with each other on the target service.

Specifically, the analyser may acquire the relationship of multiple target tables on the target service from a third string following the conditional keyword in the join select statement. For example, the join select statement is "select coll, col2, col3 from table_1 left join table_2 on table_1.col1 = table_2.col2; as can be seen, there is a relationship between table_1 and table_2, and table_1 and table_2 are associated with each other via the columns with column names coll and col2, i.e. the value of the column with column name coll in table_1 and the value of the column with column name col2 in table_2 refer to each other, and the value of the column with column name col2 in table_2 is derived from the value in the column with column name coll in table_1.

After determining the relationship between table_1 and table_2, it is possible to string together table1, coll, table2 and col2 to form a four-element set [table1, coll, table2, col2]. The four-element set can indicate that table_1 and table_2 are associated with each other via the column with column name coll in table_1 and the column with column name col2 in table_2.

If the join select statement comprises multiple instances of "join" being used consecutively, third strings following the conditional keyword may be extracted separately, to obtain a multi-dimensional four-element array. For example:
[[table1, coll, table2, col2],
[table2, col2, table3, col3],
[..., ..., ..., ...],
[tableN-1, colN-1, tableN, colN]]

In this case, in addition to being able to determine the data model according to the table name of the target table, the column name of the target column, and the data type, the analyser may also determine the data model according to the relationship of the multiple tables on the target service.

The above technical solution utilizes structural information in the data access statement to determine a potential relationship between tables by analysis, and generates a data model according to this relationship. The fact that the technical solution above does not rely on a reference foreign key in a schema of the database, avoids the disadvantage of inaccuracy of the generated data model or even inability to generate a data model relationship due to the lack of a reference foreign key in the schema of the database, such that the accuracy of the generated data model is further improved.

It should be understood that in embodiments of the present application, "first", "second", "third" and "fourth" are merely intended to distinguish between different objects, but do not limit the scope of embodiments of the present application.

It should also be understood that the specific examples in embodiments of the present application are merely intended to help those skilled in the art to better understand embodiments of the present application, without limiting the scope of embodiments of the present application.

It can be seen from the description above that the analyser acquires the table name of the target table and the column name of the target column in different ways for select statements and insert statements. Thus, in an embodiment, there may be two analysers; one of the analysers (called a first analyser for convenience of description) may acquire the table name of the target table, the column name of the target column and the relationship of multiple target tables on the target service in the select statement, and the other analyser (called a second analyser) may acquire the table name of the target table and the column name of the target column in the insert statement.

For example, as shown in Figs. 3 and 4, the analyser in Fig. 3 is the second analyser, which can acquire the table name and column name; and the analyser in Fig. 4 is the first analyser, which can acquire the table name, the column name, and the relationship between tables.

In this embodiment, before step 220, the preprocessor may determine the type of the SQL statement, and then send the SQL statement to the corresponding analyser. That is, it sends the select statement to the first analyser in Fig. 4, and sends the insert statement to the second analyser in Fig. 3.

In another embodiment, there may be three analysers; one of the analysers may acquire the table name and column name of the join select statement, another analyser may acquire the table name and column name of a statement other than the join select statement among select statements, and the remaining analyser may acquire the table name and column name of the insert statement.

In another embodiment, there may be one analyser, for example the analyser in Fig. 4. This analyser may perform three steps in total: acquiring the table name of the target table in the SQL statement, acquiring the column name of the target column, and acquiring the relationship of multiple target tables on the target service. If the SQL statement is a join select statement, the analyser may perform these three steps in succession; if the SQL statement is another statement (such as an insert statement), the analyser may not perform the step of acquiring the relationship of multiple target tables on the target service, and only perform the first two steps.

To facilitate subsequent model generator processing, optionally, as shown in Fig. 4, the method 200 may further comprise: subjecting the table name of the target table and the column name of the target column to aggregation, or subjecting the table name of the target table, the column name of the target column and the relationship of multiple target tables on the target service to aggregation.

The aggregated table name and column name may be called a structured result set, or the aggregated table name, column name and relationship may be called a structured result set. The structured result set may be understood to describe an object in a non-discrete manner. For example, when describing what articles a supermarket has, the description may be that fruit includes apples and bananas, etc., daily necessities include laundry liquid and towels, etc., and vegetables include potatoes and tomatoes, etc., instead of the description that the supermarket has bananas, laundry detergent and potatoes, etc.

Demonstratively, suppose that there are two target tables, with table names table_X and table_Y respectively, wherein the column names of target columns in table_X are coll, col2 and colN respectively, the column names of target columns in table_Y are coll, col2 and colN respectively, and table_X and table_Y are associated with each other via the column with column name coll in table_X and the column with column name col2 in table_Y. After aggregation of the table names of the target tables, the column names of the target columns, and the relationship of the two target tables, a JSON (javascript object notation) compound structural body as shown below may be obtained:

```
    {
       "tables":[
          {
             "table _name": "table_X" ,
             "table_columns":[
                "coll",
                "col2",
                "colN"
             ]
          },
          {
             "table_name":"table_Y",
             "table_columns":[
                "col1",
                "col2",
                "colN"
             ]
          }
       ],
       "relations":[
          {
             "from_tab":"table_X",
             "from_col":"col1",
             "to_tab":"table_Y",
             "to_col":"col2"
          }
       ]
    }
```

In the technical solution above, before generating the data model, the identifiers of the target tables and the identifiers of the target columns are aggregated; compared with the identifiers of the target tables and the identifiers of the target columns being in a discrete state, this facilitates subsequent operations, helping to improve the efficiency of data model generation.

After the analyser has determined the column names of the target columns, the model generator still needs to determine the data types of the target columns. For example, whether the data type of a target column is an integer type or a string type, etc. Specifically, based on the table name of a target table, the model generator can extract from the schema of the database a data type of a target column in said target table, and can thereby obtain a list of three-element sets, e.g. [[table_1, coll, datatype], [table_1, col2, datatype], [table_N, colN, datatype]]. Here, "datatype" represents the data type.

After obtaining the data types the target columns, the model generator can determine a data model of the database, based on the table names of the target tables, the column names of the target columns and the data types, or based on the table names of the target tables, the column names of the target columns, the relationship of multiple target tables on the target service, and the data types.

Optionally, the table name of the target table may act as an entity name of the data model, the column name of the target column may act as an attribute name of the corresponding entity, and the data type of the target column may act as a data type of the corresponding entity attribute.

Suppose that there are four target tables called by a target service, the table names being respectively Table_X, Table_Y, Table_Z and Table_N, wherein the column name of the target column in Table_X is Col_X, and the data type of the target column is Datatype_X; the column name of the target column in Table_Y is Col_Y, and the data type of the target column is Datatype_Y; the column name of the target column in Table_Z is Col_Z, and the data type of the target column is Datatype_Z; the column name of the target column in Table_N is Col_N, and the data type of the target column is Datatype_N. The generated data model may be as shown in Table 1.

**Table 1**

| Entity Name | Entity Attribute Name | Entity Attribute Data Type |
|---|---|---|
| Table_X | Col_X | Datatype_X |
| Table_Y | Col_Y | Datatype_Y |
| Table_Z | Col_Z | Datatype_Z |
| Table_N | Col_N | Datatype_N |

Furthermore, if multiple target tables have a relationship on the target service, the table names of multiple mutually associated target tables may be used as entity names of multiple mutually associated entities, and the column names of multiple mutually associated target columns may be used as association attributes of multiple mutually associated entities.

An explanation is now given, taking Table 1 as an example. Suppose that Table_X and Table_Y are mutually associated via the column with column name Col_X in Table_X and the column with column name Col_Y in Table_Y, and that Table_Z and TableN are mutually associated via the column with column name Col_Z in Table_Z and the column with column name Col_Z in Table_N; then the relationships between multiple entities obtained may be as shown in Table 2.

**Table 2**

| From_Entity | From_Attribute_Name | To_Entity | To_Attribute_Name |
|---|---|---|---|
| Table_X | Col_X | Table_Y | Col_Y |
| Table_N-1 | Col_N-1 | Table_N | Col_N |

Here, the values of from_tab and to_tab are the entity names of two mutually associated entities. from_col and to_col are the association attributes of two mutually associated entities.

A data model finally generated according to an insert statement and a non-join select statement among select statements is as shown in Table 1; a data model finally generated according to a join select statement is as shown in Table 1 and Table 2.

It should be explained that if entities with the same name are present, the analyser may also subject the entities with the same name to attribute expansion.

Optionally, the method 200 may further comprise: making the data model persistent, to store the data model in a base-layer database.

Method embodiments among embodiments of the present application have been described in detail above; apparatus embodiments among embodiments of the present application are described below. The apparatus embodiments correspond to the method embodiments; therefore, for parts not described in detail, reference may be made to the method embodiments above. The apparatus is able to realize any possible manner in the method above.

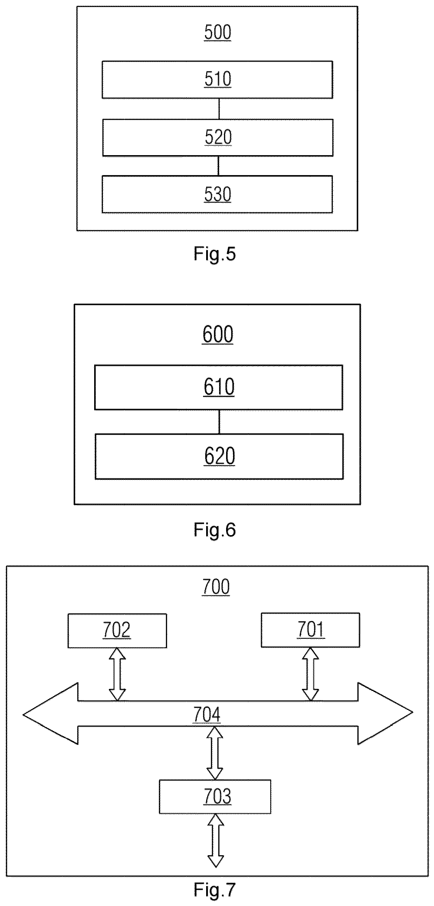

Fig. 5 shows a schematic block diagram of a data model generation apparatus 500 in an embodiment of the present application. The data model generation apparatus 500 can perform the data model generation method 200 in embodiments of the present application described above, and the data model generation apparatus 500 may be the third-party device in the method above.

As shown in Fig. 5, the data model generation apparatus 500 may comprise:
a preprocessor 510, for acquiring a data access statement sent by a user end to a database, the data access statement being used to access data of a target service in the database;
an analyser 520, for acquiring an identifier of each of at least one target table in the database which is called by the target service, and an identifier of a target column in the target table, according to the data access statement;
a model generator 530, for determining a data type of the target column, according to the identifier of the target table and a schema of the database.

The model generator 530 is further used for determining a data model of the database, according to the identifier of the target table, the identifier of the target column and the data type.

Optionally, in an embodiment of the present application, the preprocessor 510 is specifically used for: filtering multiple items of information generated on the basis of the target service, to obtain the data access statement, wherein the multiple items of information comprise the data access statement.

Optionally, in an embodiment of the present application, the analyser 520 is specifically used for: when the data access statement is a select statement, extracting a first string between a "from" keyword and a conditional keyword in the select statement, the first string being the identifier of the target table; and extracting a second string between a "select" keyword and the "from" keyword in the select access statement, the second string being the identifier of the target column.

Optionally, in an embodiment of the present application, when the select statement is a join select statement and the at least one target table comprises multiple target tables, the analyser 520 is specifically used for: acquiring a relationship of the multiple target tables on the target service, according to the join select statement; and determining the data model according to the identifier of the target table, the identifier of the target column, the relationship of the multiple target tables on the target service, and the data type.

Optionally, in an embodiment of the present application, the analyser 520 is specifically used for: acquiring a relationship of the multiple target tables on the target service, from a third string following the conditional keyword in the join select statement.

Optionally, in an embodiment of the present application, the analyser 520 is specifically used for: when the data access statement is an insert statement, extracting a fourth string between an "insert" keyword and a "value" keyword in the insert statement, the fourth string being the identifier of the target table; and extracting a fifth string in brackets following the "value" keyword in the insert statement, the fifth string being the identifier of the target column.

Optionally, in an embodiment of the present application, the analyser 520 is further used for: subjecting the identifier of the target table and the identifier of the target column to aggregation; and the model generator 530 is specifically used for: determining the data model on the basis of the identifier of the target table and the identifier of the target column after aggregation thereof.

It should be understood that the preprocessor 510, the analyser 520 and the model generator 530 may respectively realize the corresponding operations of the preprocessor, the analyser and the model generator in the method 200, which for brevity are not described again here.

Fig. 6 shows a schematic block diagram of a data model generation apparatus 600 in another embodiment of the present application. The data model generation apparatus 600 can perform the data model generation method 200 in embodiments of the present application described above, and the data model generation apparatus 600 may be the third-party device in the method above.

As shown in Fig. 6, the data model generation apparatus 600 may comprise:
an acquisition unit 610, for acquiring a data access statement sent by a user end to a database, the data access statement being used to access data of a target service in the database.

The acquisition unit 610 is further used for acquiring an identifier of each of at least one target table in the database which is called by the target service, and an identifier of a target column in the target table, according to the data access statement.

A determining unit 620 is used for determining a data type of the target column, according to the identifier of the target table and a schema of the database.

The determining unit 620 is further used for determining a data model of the database, according to the identifier of the target table, the identifier of the target column and the data type.

Optionally, in an embodiment of the present application, the acquisition unit 610 is specifically used for: filtering multiple items of information generated on the basis of the target service, to obtain the data access statement, wherein the multiple items of information comprise the data access statement.

Optionally, in an embodiment of the present application, the acquisition unit 610 is specifically used for: when the data access statement is a select statement, extracting a first string between a "from" keyword and a conditional keyword in the select statement, the first string being the identifier of the target table; and extracting a second string between a "select" keyword and the "from" keyword in the select statement, the second string being the identifier of the target column.

Optionally, in an embodiment of the present application, when the select statement is a join select statement and the at least one target table comprises multiple target tables, the acquisition unit 610 is specifically used for: acquiring a relationship of the multiple target tables on the target service, according to the join select statement; and determining the data model according to the identifier of the target table, the identifier of the target column, the relationship of the multiple target tables on the target service, and the data type.

Optionally, in an embodiment of the present application, the acquisition unit 610 is specifically used for: acquiring a relationship of the multiple target tables on the target service, from a third string following the conditional keyword in the join select statement.

Optionally, in an embodiment of the present application, the acquisition unit 610 is specifically used for: when the data access statement is an insert statement, extracting a fourth string between an "insert" keyword and a "value" keyword in the insert statement, the fourth string being the identifier of the target table; and extracting a fifth string in query brackets of the "value" keyword in the insert statement, the fifth string being the identifier of the target column.

Optionally, in an embodiment of the present application, the data model generation apparatus 600 further comprises an aggregation unit, for subjecting the identifier of the target table and the identifier of the target column to aggregation; and the determining unit 620 is specifically used for: determining the data model on the basis of the identifier of the target table and the identifier of the target column after aggregation thereof.

Fig. 7 is a schematic drawing of the hardware structure of a data model generation apparatus 700 in an embodiment of the present application. The data model generation apparatus 700 shown in Fig. 7 may be a third-party device, and the data model generation apparatus 700 comprises a memory 701, a processor 702, a communication interface 703 and a bus 704. The memory 701, processor 702 and communication interface 703 are communicatively connected to one another via the bus 704.

The memory 701 may be read-only memory (ROM), a static storage devices and random access memory (RAM). The memory 701 may store a program, and when the program stored in the memory 701 is executed by the processor 702, the processor 702 and the communication interface 703 are used to perform various steps of the data model generation method in embodiments of the present application.

The processor 702 may be a general-purpose CPU, a microprocessor, an application specific integrated circuit (ASIC), a graphics processing unit (GPU), or one or more integrated circuit, used to perform a relevant program, so as to realize functions required to be performed by units in the apparatus in embodiments of the present application, or perform the data model generation method in embodiments of the present application.

The processor 702 may also be an integrated circuit chip, with the ability to process signals. In the process of implementation, various steps of the data model generation method in embodiments of the present application may be completed by means of instructions in the form of software or integrated logic circuitry of hardware in the processor 702.

The processor 702 may also be a general-purpose processor, a digital signal processor (DSP), an ASIC, a field programmable gate array (FPGA), or another programmable logic device, discrete gate or transistor logic device/discrete hardware component. It is able to realize or execute each method, step and logic block diagram disclosed in embodiments of the present application. The general-purpose processor may be a microprocessor, or the processor may be any conventional processor, etc. Steps of the method disclosed in conjunction with embodiments of the present application may be directly embodied as hardware for the processor to execute to completion, or be executed to completion using a combination of hardware and software modules in the processor. The software modules may be located in a storage medium that is mature in the art, such as RAM, internal memory, ROM, programmable ROM or electrically erasable programmable memory/registers. The storage medium is located in the memory 701; the processor 702 reads information in the memory 701, and in conjunction with hardware thereof, completes functions required to be performed by units comprised in the apparatus in embodiments of the present application, or performs the data model generation method in embodiments of the present application.

The communication interface 703 uses a transceiving apparatus such as, but not limited to, a transceiver, to realize communication between the data model generation apparatus 700 and another device or communication network.

The bus 704 may comprise a pathway for transmitting information among the various components (e.g. the memory 701, the processor 702 and the communication interface 703) of the data model generation apparatus 700.

It should be noted that although only the memory, processor and communication interface are shown in the data model generation apparatus 700 described above, those skilled in the art will understand that in the process of specific implementation, the data model generation apparatus 700 may also comprise other devices necessary for normal operation. Moreover, those skilled in the art will understand that the data model generation apparatus 700 may also comprise hardware devices for realizing other additional functions, depending on actual needs. Furthermore, those skilled in the art will understand that the data model generation apparatus 700 may also only comprise devices that are necessary for realizing embodiments of the present application, and need not comprise all of the devices shown in Fig. 7.

Embodiments of the present application further provide a computer readable storage medium storing program code for execution by a device, the program code comprising instructions for executing steps in the data model generation method described above.

Embodiments of the present application further provide a computer program product, comprising a computer program stored on a computer readable storage medium, the computer program comprising program instructions which, when executed by a computer, cause the computer to perform the data model generation method described above.

The computer readable storage medium may be a transient computer readable storage medium or a non-transient computer readable storage medium.

Those skilled in the art will clearly understand that for convenience and brevity of description, the specific operating process of the apparatus described above is not described here superfluously, as reference may be made to the corresponding process in the method embodiments above.

In several embodiments provided in the present application, it should be understood that the apparatus and method disclosed may be realized in other ways. For example, the apparatus embodiments described above are merely schematic; for example, the division of the units is merely a division in terms of logic functions, and division may be accomplished in other ways in actual implementation, e.g. multiple units or components may be combined or may be integrated in another system, or certain features may be omitted or not executed. Furthermore, couplings or direct couplings or communicative connections between parts that are shown or discussed may be indirect couplings or communication connections via certain interfaces, apparatuses or units, and may be electrical, mechanical or in another form. Words used in the present application are merely used for describing embodiments, not for limiting the claims. As used in the description of the claims and embodiments, unless clearly indicated otherwise in the context, the singular forms "a" and "the" are intended to likewise include the plural forms. Similarly, as used in the present application, the term "and/or" means any and all possible combinations including one or more than one of the associated items listed. Furthermore, when used in the present application, the term "comprises" refers to the existence of the stated feature, entity, step, operation, element and/or component, without ruling out the existence or addition of one or more other feature, entity, step, operation, element, component and/or subgroup of these.

All aspects, embodiments, implementations or features in the embodiments described may be used alone or in any combination. All aspects in the embodiments described may be realized by software, hardware or a combination of software and hardware. The embodiments described may also be embodied by a computer readable medium storing computer readable code, the computer readable code comprising instructions executable by at least one computing apparatus. The computer readable medium may be associated with any data storage apparatus capable of storing data readable by a computer system. Examples of computer readable media may include ROM, RAM, compact disc read-only memory (CD-ROM), hard disk drives (HDD), digital video discs (DVD), magnetic tape and optical data storage apparatuses, etc. The computer readable media may also be distributed in a computer system connected via a network, such that the computer readable code may be stored and executed in a distributed manner.

The technical descriptions allow reference to the drawings, which form part of the present application, and implementations according to the described embodiments are shown in the drawings by description. Although these embodiments are described in sufficient detail to enable a person skilled in the art to implement them, they are non-limiting; thus, other embodiments may be used, and changes may be made without departing from the scope of the described embodiments. For example, the order of operations described in the flow chart is non-limiting, so the order of two or more operations illustrated in the flow chart and described in accordance with the flow chart may be changed according to embodiments. As another example, in some embodiments, one or more operation illustrated in the flow chart and described in accordance with the flow chart is optional, or may be deleted. Furthermore, some steps or functions may be added to the disclosed embodiments, or the order of two or more steps is switched. All of these changes are considered to be included in the disclosed embodiments and claims.

The above are merely specific ways of implementing embodiments of the present application, but the scope of protection of embodiments of the present application is not limited to this. All changes or substitutions which might readily occur to any person skilled in the art within the technical scope of disclosure in embodiments of the present application shall be included in the scope of protection of embodiments of the present application. Therefore, the scope of protection of embodiments of the present application shall be the scope of protection of the claims.

## Claims

1. Data model generation method, wherein the method comprises:
acquiring (210) a data access statement sent by a user end to a database, the data access statement being used to access data of a target service in the database;
acquiring (220) an identifier of each of at least one target table in the database which is called by the target service, and an identifier of a target column in the target table, according to the data access statement;
determining (230) a data type of the target column, according to the identifier of the target table and a schema of the database; determining (240) a data model of the database, according to the identifier of the target table, the identifier of the target column and the data type.

2. The method as claimed in claim 1, wherein the step of acquiring (210) a data access statement sent by a user end to a database comprises:
filtering multiple items of information generated on the basis of the target service, to obtain the data access statement, wherein the multiple items of information comprise the data access statement.

3. The method as claimed in claim 1 or 2, wherein the step of acquiring (220) an identifier of each of at least one target table in the database which is called by the target service, and an identifier of a target column in the target table, according to the data access statement, comprises:
when the data access statement is a select statement, extracting a first string between a "from" keyword and a conditional keyword in the select statement, the first string being the identifier of the target table; and
extracting a second string between a "select" keyword and the "from" keyword in the select statement, the second string being the identifier of the target column.

4. The method as claimed in claim 3, wherein, when the select statement is a join select statement and the at least one target table comprises multiple target tables, the method further comprises:
acquiring a relationship of the multiple target tables on the target service, according to the join select statement; and
the step of determining (240) a data model of the database, according to the identifier of the target table, the identifier of the target column and the data type, comprises:
determining the data model according to the identifier of the target table, the identifier of the target column, the relationship of the multiple target tables on the target service, and the data type.

5. The method as claimed in claim 4, wherein the step of acquiring a relationship of the multiple target tables on the target service, according to the join select statement, comprises:
acquiring a relationship of the multiple target tables on the target service, from a third string following the conditional keyword in the join select statement.

6. The method as claimed in claim 1 or 2, wherein the step of acquiring (220) an identifier of each of at least one target table in the database which is called by the target service, and an identifier of a target column in the target table, according to the data access statement, comprises:
when the data access statement is an insert statement, extracting a fourth string between an "insert" keyword and a "value" keyword in the insert statement, the fourth string being the identifier of the target table; and
extracting a fifth string in brackets following the "value" keyword in the insert statement, the fifth string being the identifier of the target column.

7. The method as claimed in any one of claims 1 - 6, wherein the method further comprises:
subjecting the identifier of the target table and the identifier of the target column to aggregation; and
the step of determining (240) a data model of the database, according to the identifier of the target table, the identifier of the target column and the data type, comprises:
determining the data model on the basis of the identifier of the target table and the identifier of the target column after aggregation thereof.

8. A data model generation apparatus (700), comprising:
a memory (701) for storing a program;
a processor (702) for executing the program stored in the memory, wherein, when the program stored in the memory is executed, the processor is used for acquiring a data access statement sent by a user end to a database, the data access statement being used to access data of a target service in the database;
the processor (702) is further used for acquiring an identifier of each of at least one target table in the database which is called by the target service, and an identifier of a target column in the target table, according to the data access statement;
the processor (702) is further used for determining a data type of the target column, according to the identifier of the target table and a schema of the database;
the processor (702) is further used for determining a data model of the database, according to the identifier of the target table, the identifier of the target column and the data type.

9. A computer readable storage medium, wherein the computer readable medium stores program code for execution by a device, the program code comprising instructions for performing steps in the data model generation method as claimed in any one of claims 1 - 7.

10. A data model generation apparatus (500), comprising:
a preprocessor (510), for acquiring a data access statement sent by a user end to a database, the data access statement being used to access data of a target service in the database;
an analyser (520), for acquiring an identifier of each of at least one target table in the database which is called by the target service, and an identifier of a target column in the target table, according to the data access statement;
a model generator (530), for determining a data type of the target column, according to the identifier of the target table and a schema of the database;
the model generator (530) being further used for determining a data model of the database, according to the identifier of the target table, the identifier of the target column and the data type.

11. A data model generation apparatus (600), comprising:
an acquisition unit (610), for acquiring a data access statement sent by a user end to a database, the data access statement being used to access data of a target service in the database;
the acquisition unit (610) being further used for acquiring an identifier of each of at least one target table in the database which is called by the target service, and an identifier of a target column in the target table, according to the data access statement;
a determining unit (620), for determining a data type of the target column, according to the identifier of the target table and a schema of the database;
the determining unit (620) being further used for determining a data model of the database, according to the identifier of the target table, the identifier of the target column and the data type.
